# DEMANDE DE BREVET EUROPEEN

(11) **EP 0 764 620 A1**
(43) Date de publication de la demande: **26.03.1997**
(21) Numéro de dépôt: 96490035.1
(22) Date de dépôt: 23.09.1996
(51) Int. Cl.: C05F 17/00

(54) **Procédé de compostage par apport fractionné de matières fermentescibles**

(30) Priorité: 22.09.1995 FR 9511343
(71) Demandeur: Peultier, Philippe, 59184 Sainghin-en-Weppes (FR)
(72) Inventeur: Peultier, Philippe, 59184 Sainghin-en-Weppes (FR)
(74) Mandataire: Hénnion, Jean-Claude

(57) **Abrégé**

Le procédé de compostage de matières fermentescibles en tas de l'invention met en oeuvre un matériau support carboné poreux et un flux d'air circulant à travers ledit support. Il consiste à apporter les matières fermentescibles, périodiquement, au substrat de compostage , sous forme de n fractions , de quantité réduite par rapport au substrat , et plus particulièrement représentant à chaque apport entre 5% et 30% en poids du substrat, à mélanger les matières fermentescibles et le substrat par retournement pendant les périodes d'apport, puis si nécessaire à laisser la réaction de fermentation se dérouler sans apport et de préférence avec retournement pendant une durée complémentaire.

La période entre deux apports est d'environ une journée pour des matières fermentescibles sous une forme solide ou pâteuse et inférieure ou égale à une journée pour des matières fermentescibles sous forme sensiblement liquide.

## Description

La présente invention concerne le compostage de matières fermentescibles mettant en oeuvre un substrat de compostage, carboné et poreux, et un flux d'air circulant à travers ledit substrat.

Le compostage est une décomposition aérobie de déchets organiques par des populations mélangées de micro-organismes indigènes sous condition contrôlée qui conduit à un résidu organique partiellement stabilisé. Les déchets organiques en question peuvent provenir des ordures ménagères, peuvent être des déchets dénommés déchets verts, provenant des résidus de jardinage ou encore peuvent être des boues industrielles plus ou moins liquides, des boues urbaines ou des effluents agricoles (lisier, fientes).

Selon une technique connue, le compostage des matières fermentescibles se fait en mélangeant lesdites matières avec un substrat de compostage qui est un support carboné poreux. La présence du carbone permet un rééquilibrage chimique du mélange lors de la réaction de fermentation . Le substrat est poreux pour permettre une circulation d'air à travers le mélange, favorisant l'évacuation des gaz produit lors de la réaction de fermentation. Selon la technique de compostage en tas, on réalise le mélange des matières fermentescibles et du substrat de compostage dans une proportion déterminée, le tas étant constituée sur une surface pourvue de moyens de circulation d'air, soit par aspiration, soit par soufflage.

Dans le cadre de cette technique traditionnelle de compostage en tas, on a déjà proposé dans le brevet US.4,288,241 d'améliorer la cinétique de compostage, en alternant de manière cyclique le sens de circulation de l'air à travers le tas de substrat et de matières fermentescibles , en sorte d'obtenir un taux d'humidité homogène dans tout le volume du tas. De manière complémentaire, il est enseigné dans cette publication de réaliser un tas initial ayant un taux global d'humidité compris enter 45% et 70%, et de maintenir ce taux d'humidité dans cette fourchette, en compensant la diminution d'humidité liée au processus de fermentation, par des apports complémentaires de matières fermentescibles. Le but visé par ces apports de matières fermentescibles est de permettre une élévation de température du tas entre 60°C et 65°C, et par là-même de stériliser les matières du tas en tuant les agents pathogènes.

Le principal inconvénient de la technique traditionnelle de compostage en tas, y compris dans sa variante perfectionnée décrite dans le brevet US.4,288,241 est qu'elle s'accompagne , en plus d'un dégagement normal de dioxyde de carbone, d'un dégagement supplémentaire de gaz pestilentiels tout-à-fait préjudiciables en terme de nuisance olfactive.

Dans le but notamment de diminuer cette nuisance olfactive, on a par ailleurs proposé dans la demande de brevet internationale WO.90/09964 de remplacer dans la technique traditionnelle de compostage en tas, le substrat carboné poreux usuel par un substrat recyclé de compost, c'est-à-dire un substrat exclusivement constitué d'un compost issu de la fermentation de matières fermentescibles. Selon l'enseignement de cette publication, ce type particulier de substrat permet d'absorber les odeurs.

Le but que s'est fixé le demandeur est de proposer un procédé de compostage en tas, qui met en oeuvre un substrat de compostage classique comportant comme matériau de base un support carboné poreux, et qui permet de réduire au minimum les nuisances olfactives tout en améliorant sensiblement les conditions opératoires en terme de quantité de support carboné poreux utilisé ,et en terme de durée de compostage.

Ce but est parfaitement atteint par le procédé de l'invention. Il s'agit d'un procédé de compostage de matières fermentescibles en tas, mettant en oeuvre un matériau support carboné poreux et un flux d'air circulant à travers ledit support. De manière classique ce procédé consiste à mélanger les matières fermentescibles avec un substrat de compostage comportant ledit matériau support et à retourner de temps en temps le mélange de matières fermentescibles et de substrat moyennant quoi la réaction de fermentation se déroule pendant une durée déterminée, le flux d'air évacuant les gaz produits par ladite fermentation.

De manière caractéristique selon l'invention, les matières fermentescibles sont apportées , périodiquement, au substrat de compostage, sous forme de n fractions, de quantité réduite par rapport au substrat, et le mélange des matières fermentescibles et substrat est effectué par retournement pendant les périodes d'apport.

Ainsi contrairement à ce qui est réalisé dans la technique classique de compostage en tas, y compris dans le procédé du brevet US.4,288,241, on ne réalise pas d'emblée un tas initial de compostage comprenant une quantité de matières fermentescibles équivalente ou supérieure à la quantité de substrat carboné poreux, mais on fractionne l'apport des matières fermentescibles, celles-ci étant pour chaque fraction apportées en quantité réduite par rapport à l'ensemble du substrat auquel elle est apportée. Cet apport peut être réalisé tous les jours pour des produits solides et beaucoup plus fréquemment par aspersion pour des produits liquides. En outre, lorsqu'il s'agit de matières fermentescibles solides ou pâteuses , on effectue de préférence un mélange par retournement du tas systématiquement à chaque apport. En revanche, ce mélange ne sera pas systématique lorsqu'il s'agit de matières fermentescibles liquides , et pourra dans ce cas être réalisé tous les un, deux , trois ou quatre jours.

Selon l'invention, l'ajout et le mélange de fractions réduites de matières fermentescibles ont pour principaux effets de conserver au tas une porosité maximale et de réduire au minimum les risques de colmatage du substrat poreux par les matières fermentescibles apportées. Il en résulte d'une part que la cinétique de compostage se trouve sensiblement améliorée, et d'autre part que le processus de fermentation se déroule en tout point du tas avec un apport d'oxygène qui est suffisant pour limiter, voire éviter la production de gaz pestilentiels.

En fonction de la nature des matières fermentescibles , de la fréquence et de la quantité des apports, il peut arriver que la totalité des matières fermentescibles ne soit pas dégradée en compost à l'issue de la période d'apport. Dans ce cas , on laisse la réaction de fermentation se poursuivre sans apport pendant une durée complémentaire suffisante, de préférence avec retournement du tas.

A titre indicatif, la durée de la période d'apport peut varier de 15 à 40 jours, et la durée de la période complémentaire pourra dans certains cas varier entre 5 et 30 jours.

Plus particulièrement, la quantité de matières fermentescibles est comprise entre 5% et 30% en poids du substrat, et de préférence entre 12% et 22%. En dessous de 5% la quantité d'apport devient trop faible par rapport au substrat pour garantir un rendement de la réaction de fermentation qui soit suffisant. Au-delà de 30%, les risques de colmatages localisés du substrat sont trop importants pour garantir une réaction de fermentation sans nuisances olfactives.

Il revient à l'homme du métier de choisir judicieusement le pourcentage en poids de chaque fraction de matières fermentescibles apportées par rapport au poids de substrat , en fonction de la nature des matières fermentescibles et principalement de leur vitesse de fermentation, sachant que plus les matières apportées sont aptes à être rapidement dégradées en compost, et plus le pourcentage en poids rapporté à chaque fraction par rapport au poids du substrat pourra être important.

La présente invention sera mieux comprise à la lecture de la description qui va être faite de deux exemples de mise en oeuvre du procédé de compostage par apport fractionné de matières fermentescibles illustré par le dessin annexé dans lequel :
La figure 1 est une représentation schématique en coupe transversale du tas de substrat de compostage,
La figure 2 est une représentation schématique en coupe transversale du tas constitué par le substrat et la fraction de matières fermentescibles apportées, avant retournement et ,
La figure 3 est une représentation schématique en coupe transversale du tas de la figure 2 après retournement.

Le compostage en tas se déroule généralement à l'air libre sur une aire de compostage qui de préférence comporte des moyens aptes à créer un flux d'air à travers le tas constitué des matières fermentescibles et du substrat de compostage. Ce substrat de compostage est un support carboné et poreux, généralement des déchets de bois, par exemple des écorces broyées, des copeaux de bois, de la paille broyée, des roseaux, des broyats de bois...

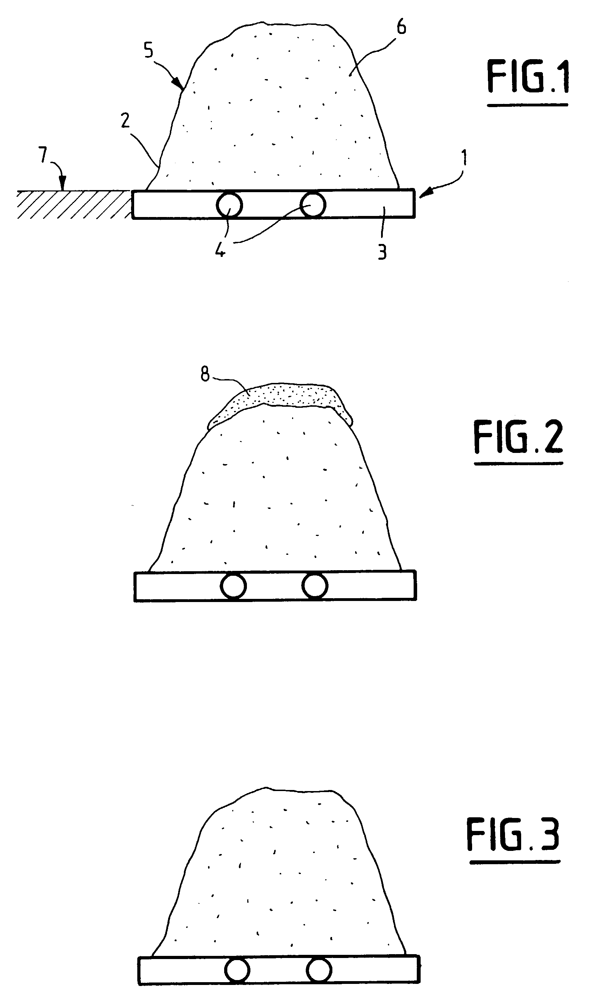

Sur la figure 1 on a représenté l'aire de compostage 1 dont le sol 2 est ouvert, par exemple sous forme de caillebotis, et délimite un espace vide 3 à l'intérieur duquel sont logées des canalisations 4, percées d'orifices non représentées et raccordées à une source soit d'aspiration soit de soufflage d'air.

Sur le sol 2 de l'aire de compostage on a déposé, sous forme d'un tas 5 le substrat de compostage 6.

Dans le cas de compostage d'une quantité importante de matières fermentescibles , le tas 6 peut avoir une longueur faisant plusieurs dizaines voire centaines de mètres, tandis que la largeur et la hauteur sont de l'ordre de quelques mètres. C'est cette largeur et cette hauteur que l'on a illustrées sur les figures annexées , selon la section transversale par rapport à la longueur.

Dans ces conditions il est préférable que parallèlement à l'aire de compostage 1 soit disposée une aire de roulement 7 de manière à permettre le déplacement d'un engin motorisé apte à réaliser les opérations souhaitées, notamment les retournements du tas 5.

Conformément à la caractéristique essentielle du procédé de l'invention, on vient apporter sur le tas 5 constitué uniquement du substrat de compostage 6 les matières fermentescibles 8. La quantité de matières fermentescibles 8 apportée est réduite par rapport à la quantité globale du substrat de compostage 6 déjà en place.

Cet apport étant réalisé, on mélange les matières fermentescibles 8 ainsi apportées avec le substrat 6 de manière à obtenir un tas 5 sensiblement homogène, comme illustré sur la figure 3.

A l'issue d'une période prédéterminée, relativement courte, généralement de l'ordre d'une journée, on réalise un nouvel apport 8 de matières fermentescibles et un mélange dans les mêmes conditions que lors de l'apport précédent, par retournement . Dans le cas de matières fermentescibles se présentant sous la forme de boues à 10% de matières sèches, l'ensemble de l'apport en matières fermentescibles a été réalisé en vingt fractions quotidiennes selon le même processus que décrit ci-dessus de mélange par retournement de la fraction apportée et par le tas en cours de compostage. A l'issue de ces vingt jours l'apport de matières fermentescibles a été interrompu, puis on laisse se dérouler la réaction de fermentation sans apport et de préférence en retournant le tas, pendant une durée complémentaire de cinq jours.

Pendant l'ensemble des vingt-cinq jours un flux d'air était réalisé par aspiration à travers les canalisations 4 de manière à évacuer les gaz produits lors de la réaction de fermentation .

S'agissant de matières fermentescibles se présentant sous une forme sensiblement liquide , l'apport est de préférence réalisé par aspersion à l'aide d'une canalisation positionnée en sorte que les boues d'aspersion soient dirigées vers le sommet du tas ou encore d'une buse de pulvérisation se déplaçant au-dessus du tas. Dans ce cas il n'est pas obligatoire d'effectuer le retournement dès l'apport voire même à chaque apport , le liquide pouvant diffuser par gravité dans le tas.

Dans un premier exemple de traitement non-exhaustif, on avait au départ réalisé un andain de copeaux de 500m³ faisant 100m de long et pesant environ 165 tonnes. On a apporté 25 tonnes de boues à 10% de matières sèches chaque jour pendant vingt jours, soit environ 15% de boues en poids par rapport au poids total de substrat.Ces boues étaient mélangées par retournement au reste du tas du jour précédent. Le substrat initial comportait environ 80% de matières sèches. Pendant la période d'apport de 20 jours, le taux d'humidité du tas a globalement augmenté de manière sensiblement linéaire pour atteindre environ 70 à 80% à l'issue de la période d'apport, avec toutefois entre chaque apport une légère diminution ponctuelle du taux d'humidité global. La ventilation par aspiration était de 8000m³/h sous une pression de 200mm de colonne d'eau. On a ainsi pu traiter 500 tonnes de boues à 10% de matières sèches pour un volume de 500m³ de substrat carboné poreux. Cette quantité est à comparer avec les 330 tonnes de boues qui auraient été traitées à partir des 500m³ de copeaux dans des conditions classiques, c'est-à-dire en formant d'emblée un tas en une seule fois avec le substrat et la totalité des matières fermentescibles , et en retournant le tas deux à trois fois pendant le processus de fermentation. Ce procédé de l'invention a donc pu diminuer d'une manière tout-à-fait significative la quantité de substrat à mettre en oeuvre pour le traitement d'une même quantité de matières fermentescibles. De plus la durée totale du compostage selon le procédé de la présente invention était de 25 jours alors que dans les conditions classiques précitées elle est de 30 jours.

Bien plus , le procédé à permis quasiment d'éliminer les gaz odoriférants lors du compostage. Cet avantage est particulièrement intéressant puisque la tendance actuelle est de mettre en place des systèmes permettant de capter les odeurs produites lors du compostage. La mise en oeuvre de tels systèmes s'avère inutile grâce à la technique d'apport fractionné selon l'invention.

Dans un deuxième exemple de réalisation, on avait au départ réalisé un andain de copeaux de 500 m³ pesant environ 110 tonnes. On a aspergé cet andain avec environ 18,5 tonnes de lisier (produit fermentescible liquide à 6 % de matières sèches) par jour et l'ensemble a été mélangé tous les deux ou trois jours. Les apports journaliers ont été faits pendant 30 jours,soit un apport total de lisier de l'ordre de 550 tonnes.

Dans le cas d'un compostage traditionnel il aurait fallu un tonnage de substrat beaucoup plus important (400 tonnes) pour absorber le liquide et une surface de traitement beaucoup plus grande.

Les exemples chiffrés qui a été donnés ci-dessus concerne le traitement de boues à 10% de matières sèches et de lisier à 6% de matières sèches. Cependant les exemples ne sont pas donnés à titre limitatif, toutes sortes de matières fermentescibles peuvent être traitées conformément à l'invention, en particulier la partie fermentescible des ordures ménagères ou encore ce que l'on appelle les déchets verts c'est-à-dire les résidus de jardinage tels que le gazon ou les feuilles. Dans ces derniers cas, il n'est pas nécessaire d'effectuer un broyage préalable desdites matières , dans la mesure où c'est à l'issue du compostage que l'on réalise un criblage à l'aide d'un tamis à mailles différenciées de manière à séparer les différents constituants du tas de compostage. A l'aide d'un premier tamis dont les mailles sont inférieures à 1cm on récupère le compost proprement dit ; à l'aide d'un second tamis dont les mailles sont comprises entre 1 et 5cm on récupère le substrat réutilisable , tandis que les matières qui ne passent pas à travers ce second tamis sont constituées de résidus indésirables.

La fréquence de fractionnement est de préférence quotidienne, pour des produits solides ou pâteux, avec une durée d'une vingtaine de jours. Cependant les paramètres sont à déterminer en fonction du type de présentation des matières fermentescibles et notamment de leur teneur en matières sèches. Il est possible grâce au procédé de l'invention de traiter aussi bien des boues liquides à très faible teneur en matières sèches que du lisier ou des ordures ménagères , sans que cette liste soit exhaustive. Dans le cas de boues liquides à très faible teneur en matières sèches, la fréquence de fractionnement est inférieure ou égale à la journée.

La présente invention n'est pas limitée au mode de réalisation qui vient d'être décrit à titre d'exemple non exhaustif. En particulier , il est possible d'apporter des produits complémentaires liquides ou pâteux ou solides à l'occasion des apports fractionnés de matières fermentescibles. Ces produits complémentaires peuvent consister en des produits eux-mêmes fermentescibles aptes à accélérer le processus de fermentation ou encore en des produits aptes à corriger le pH en sorte de maintenir des conditions optimales de fermentation.

## Revendications

1. Procédé de compostage de matières fermentescibles en tas, mettant en oeuvre un matériau support carboné poreux et un flux d'air circulant à travers ledit support, consistant à mélanger les matières fermentescibles avec un substrat de compostage comportant ledit matériau support et à retourner de temps en temps le mélange de matières fermentescibles et de substrat , caractérisé en ce que les matières fermentescibles sont apportées, périodiquement, au substrat de compostage , sous forme de n fractions, de quantité réduite par rapport au substrat,et en ce qu'un mélange des matières fermentescibles et du substrat est effectué par retournement pendant les périodes d'apport.

2. Procédé selon la revendication 1 caractérisé en ce qu'à l'issue de la période d'apport, on laisse la réaction de fermentation se poursuivre sans apport de matières fermentescibles , et de préférence avec retournement du tas.

3. Procédé selon la revendication 1 ou 2 caractérisé en ce que la quantité de matière fermentescible à chaque apport est comprise entre 5% et 30% en poids du substrat, et de préférence entre 12% et 22%.

4. Procédé selon l'une des revendications 1 à 3 caractérisé en ce que la période entre deux apports est d'environ une journée pour des matières fermentescibles sous une forme solide ou pâteuse et inférieure ou égale à une journée pour des matières fermentescibles sous forme sensiblement liquide.

5. Procédé selon la revendication 4 caractérisé en ce que l'apport fractionné en matières fermentescibles solides ou pâteuses est réalisé à raison de 20 fractions quotidiennes , suivies d'une durée complémentaire de 5 jours.

6. Procédé selon la revendication 4 caractérisé en ce que l'apport fractionné en matières fermentescibles liquides est réalisé à raison de 30 fractions quotidiennes.

7. Procédé selon l'une des revendications 1 à 6 caractérisé en ce que le traitement de la partie fermentescible des ordures ménagères et des déchets verts, c'est-à-dire des résidus de jardinage , gazon, feuilles... est sans broyage préalable.

8. Procédé selon la revendication 7 caractérisé en ce qu'après compostage, on récupère le compost par criblage à travers un tamis ayant des mailles inférieures à 1cm, le substrat réutilisable étant récupéré par criblage à travers un tamis ayant des mailles de 1 à 5cm, les déchets ne passant pas à travers les mailles en question étant des résidus indésirables et non récupérés.

9. Procédé selon l'une des revendications 1 à 6 caractérisé en ce qu'on réalise des apports complémentaires de produits liquides, pâteux ou solides aptes à accélérer la réaction de fermentation ou à maintenir les conditions optimales de fermentation.
